# EUROPEAN PATENT APPLICATION

(11) **EP 4 541 838 A1**
(43) Date of publication of application: **23.04.2025**
(21) Application number: 23822794.6
(22) Date of filing: 24.04.2023
(51) Int. Cl.: C08G 73/00, C07D 317/00, B01J 27/14

(54) **CATALYST FOR SYNTHESIZING POLYIMIDE AND PREPARATION METHOD THEREFOR, AND POLYIMIDE COMPOUND**

(30) Priority: 16.06.2022 CN 202210684716
(71) Applicant: BYD Company Limited, Shenzhen, Guangdong 518118 (CN)
(72) Inventor: HE, Junpeng, Shenzhen, Guangdong 518118 (CN); LUO, Degui, Shenzhen, Guangdong 518118 (CN); YAO, Cheng, Shenzhen, Guangdong 518118 (CN); DUAN, Pingping, Shenzhen, Guangdong 518118 (CN)
(74) Representative: Mathys & Squire
(86) International application number: PCT/CN2023/090344
(87) International publication number: WO 2023/241223

(57) **Abstract**

Provided are a catalyst for synthesizing polyimide and a preparation method therefor, and a polyimide compound. The structural formula of the catalyst is represented by formula (1): 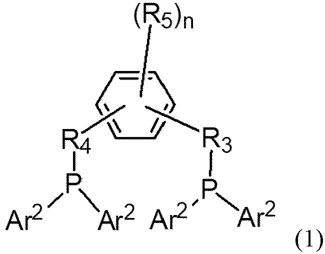 : in formula (1), R₃ is selected from O or NH; R₄ is selected from O or NH; Ar² is a substituted aryl group, and the substituent of the substituted aryl group comprises a carboxyl group; R₅ is selected from a hydrogen atom, a chlorine atom, a bromine atom, an iodine atom, a cyano group, a nitro group, an ester group, an alkyl group, an alkoxy group or a haloalkyl group; and n is an integer ranging from 1 to 4.

## Description

### CROSS-REFERENCE TO RELATED APPLICATIONS

The present disclosure claims priority to Chinese Patent Application No. 202210684716.2, filed on June 16, 2022 and entitled "CATALYST FOR SYNTHESIZING POLYIMIDE, AND PREPARATION METHOD AND USE THEREFOR", which is incorporated herein by reference in its entirety.

### FIELD

The present disclosure relates to the technical field of polyimide, and specifically, to a catalyst for synthesizing polyimide and a preparation method therefor, and a polyimide compound.

### BACKGROUND

Polyimide is a type of polymer material with a molecular chain containing an imide ring, with excellent properties such as high mechanical properties, high-and-low temperature resistance, flame retardancy, and irradiation resistance. Polyimide products include films, fibers, resins, foams, composites, and the like, which are widely used in the fields of national defense and military industry, microelectronics, vehicles, chemical industry, and the like. Currently, amines, quinolines, pyridines, or other nitrogen-containing compounds are usually used as catalysts for the synthesis of polyimide. However, the nitrogen-containing compound is susceptible to a reaction with an uncyclized precursor to form a salt, which leads to the difficulty in removing the catalyst. The residual catalyst affects the film-forming property of polyimide, reducing the quality of products. In addition, the existing catalysts have limited catalytic effect, so that the production process further requires multiple times of heating to accelerate the reaction, resulting in high production costs.

### SUMMARY

In view of this, the present disclosure provides a new catalyst for synthesizing polyimide. The catalyst has high reactivity to complete a reaction by one-time heating, greatly reducing production costs. In addition, the catalyst can crosslink with the molecular chain of polyimide to form a part of the polymer, so that the catalyst free in the system is reduced, thereby ensuring the good film-forming property of products.

According to a first aspect of the present disclosure, a catalyst for synthesizing polyimide is provided. The catalyst has a structural formula shown in formula (1):

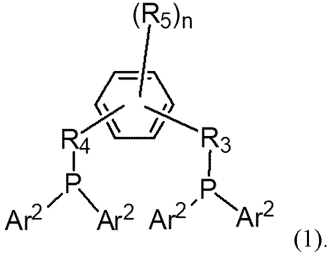

In formula (1), R₃ is selected from O or NH; R₄ is selected from O or NH; Ar² is a substituted aryl group, and a substituent of the substituted aryl group includes a carboxyl group; and R₅ is selected from a hydrogen atom, a chlorine atom, a bromine atom, an iodine atom, a cyano group, a nitro group, an ester group, an alkyl group, an alkoxy group, or a haloalkyl group, and n is an integer from 1 to 4.

Optionally, the catalyst has a structural formula shown in formula (1-1), formula (1-2), or formula (1-3):

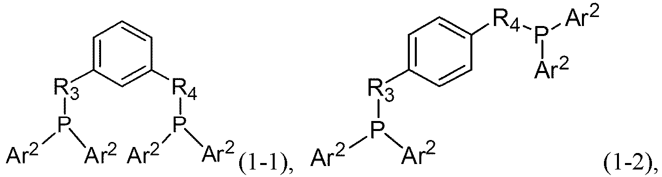

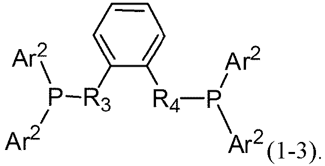

Optionally, the catalyst has a molecular structural formula shown in formulas (A) to (C):

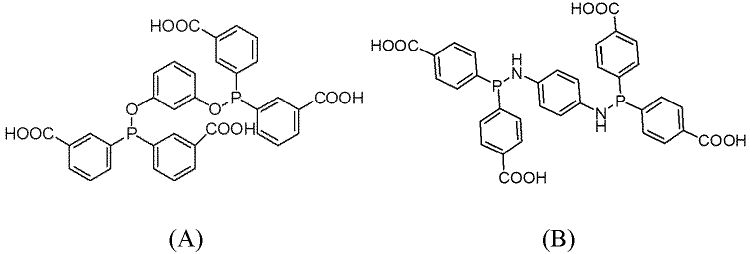

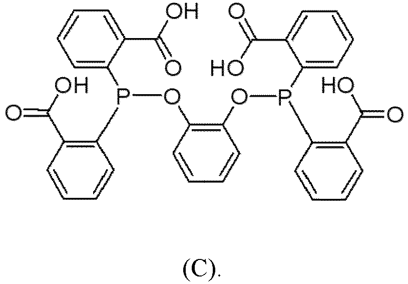

Optionally, R₅ is selected from an alkyl group or an alkoxy group; and one or more of n R₅s are in an ortho-position or a para-position of 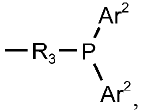 and/or one or more of n R₅s are in an ortho-position or a para-position of

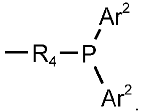

Optionally, a number of carbon atoms in the alkyl group ranges from 1 to 10; a number of carbon atoms in the haloalkyl group ranges from 1 to 10; a number of carbon atoms in the alkoxy group ranges from 1 to 10; and a number of carbon atoms in the ester group ranges from 1 to 10.

Optionally, the alkoxy group includes one or more of methoxy, ethoxy, propoxy, and butoxy; and the ester group includes one or more of methyl formate, methyl acetate, ethyl formate, or ethyl acetate.

According to a second aspect of the present disclosure, a method for preparing a catalyst for synthesizing polyimide is provided, including the following steps: A first raw material, a second raw material, and a first solvent are mixed to undergo a first reaction to obtain an intermediate product; and the intermediate product is hydrolyzed to obtain the catalyst for synthesizing polyimide. A chemical formula of the first raw material is Ar¹₂PCl, where Ar¹ is a substituted aryl group, and a substituent of the substituted aryl group includes one or more of cyano, 1,3-dioxolane, and methyl formate. A structural formula of the second raw material is shown in formula (2): 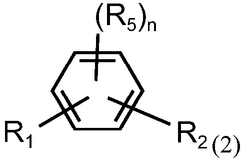 . In formula (2), R₁ is selected from OH or NH₂; R₂ is selected from OH or NH₂; and R₅ is selected from a hydrogen atom, a chlorine atom, a bromine atom, an iodine atom, a cyano group, a nitro group, an ester group, an alkyl group, an alkoxy group, or a haloalkyl group, and n is an integer from 1 to 4.

Optionally, the first solvent includes one or more of tetrahydrofuran or ethyl ether.

Optionally, the second raw material includes one or more of o-phenylenediamine, m-phenylenediamine, p-phenylenediamine, m-dihydroxybenzene, p-dihydroxybenzene, and o-dihydroxybenzene.

Optionally, a molar ratio of the first raw material to the second raw material to the first solvent is (1.5-2.5):1:(10-300).

Optionally, a temperature for the first reaction ranges from 0°C to 80°C, and time for the first reaction ranges from 2 h to 48 h.

Optionally, a reaction solution is obtained after the first reaction is completed. Extraction is performed on the reaction solution using a mixture of a non-polar solvent and water, and an extracted organic phase is recrystallized to obtain the intermediate product. The non-polar solvent includes one or more of ethyl acetate, ethyl ether, and dichloromethane.

Optionally, a reaction solution is obtained after the hydrolysis is completed. Extraction is performed on the reaction solution to obtain an aqueous-phase solution, and an acid is added to the aqueous-phase solution to obtain the catalyst.

Optionally, an extractant for the extraction includes a non-polar solvent and an aqueous solution of an alkali, and the non-polar solvent includes one or more of ethyl acetate, ethyl ether, and dichloromethane.

Optionally, the alkali includes one or more of sodium hydroxide and potassium hydroxide.

According to a third aspect of the present disclosure, a method for preparing polyimide is provided, including: mixing the catalyst for synthesizing polyimide according to the first aspect or the catalyst obtained by using the method for preparing the catalyst for synthesizing polyimide according to the second aspect, diamine, dianhydride, and a second solvent to undergo a second reaction, to obtain the polyimide.

Optionally, a molar ratio of the diamine to the dianhydride to the catalyst to the second solvent is (0.95-1):(0.95-1):(0.0001-0.5):(25-200).

Optionally, the diamine includes one or more of o-phenylenediamine, m-phenylenediamine, p-phenylenediamine, 4,4'-diaminodiphenyl ether, 4,4'-diaminodiphenyl sulfone, 1,3-diamino-2-methylpropane, N,N-bis(4-aminophenyl)-1,4-benzenediamine, and 9,9-bis(4-aminophenyl)fluorene.

Optionally, the dianhydride includes one or more of 2,3,3',4'-diphenyl ether tetracarboxylic acid dianhydride, 3,3',4,4'-tetracarboxybenzophenone dianhydride, 3,3',4,4'-tetracarboxydiphenylsulfone dianhydride, 2,2-bis(3,4-dicarboxyphenyl)hexafluoropropane dianhydride, 4,4'-bis(3,4-dicarboxyphenoxy)diphenyl ether dianhydride, 4,4'-bis(3,4-dicarboxyphenoxy)benzophenone dianhydride, 4,4'-bis(3,4-dicarboxyphenoxy)diphenylmethane dianhydride, and 4,4'-bis(3,4-dicarboxyphenoxy)diphenylsulfone dianhydride.

Optionally, the second solvent includes one or more of dimethyl sulfoxide, N-methyl pyrrolidone, N,N-dimethylformamide, and N,N-dimethylacetamide.

Optionally, a temperature for the second reaction ranges from 60°C to 180°C, and time for the second reaction ranges from 1 h to 48 h.

Optionally, a reaction solution is obtained after the second reaction is completed. A polar solvent is added to the reaction solution to precipitate the polyimide. The polar solvent includes one or more of methanol, ethanol, and water.

According to a fourth aspect of the present disclosure, a polyimide compound is provided. The polyimide compound is obtained by using the method for preparing the polyimide according to the third aspect.

### BRIEF DESCRIPTION OF THE DRAWINGS

FIG. 1 is a schematic diagram of a process of preparing a catalyst according to the present disclosure; and
FIG. 2 is a schematic diagram of a process of preparing polyimide according to an embodiment of the present disclosure.

### DETAILED DESCRIPTION

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

Polyimide is usually obtained through polycondensation of aromatic dianhydride and aromatic diamine in an organic solution to produce polyamide acid or polyamide ester, and then through imidization (cyclization) of polyamide acid or polyamide ester. Currently, a nitrogen-containing compound is usually used as a catalyst for the cyclization for polyimide. In the mass production process, the removal of the catalyst is abandoned due to high costs. However, the residual nitrogen-containing compound hinders the cross-linking of molecular chains, consequently affecting the film-forming property of polyimide. In addition, the current catalyst has a limited catalytic effect, and the actual production further requires two-time heating at temperatures higher than 300°C to accelerate the cyclization. This increases production costs and reduces production efficiency. To improve the production efficiency of polyimide and ensure the good film-forming property of products, the present disclosure provides a new catalyst. The catalyst has a structural formula shown in formula (1):

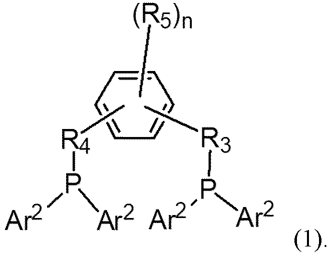

In formula (1), R₃ is selected from O or NH; R₄ is selected from O or NH; Ar² is a substituted aryl group, and a substituent of the substituted aryl group includes a carboxyl group; and R₅ is selected from a hydrogen atom, a chlorine atom, a bromine atom, an iodine atom, a cyano group, a nitro group, an ester group, an alkyl group, an alkoxy group, or a haloalkyl group, and n is an integer from 1 to 4. In some implementations of the present disclosure, a number of carbon atoms in the alkyl group ranges from 1 to 10; a number of carbon atoms in the haloalkyl group ranges from 1 to 10; a number of carbon atoms in the alkoxy group ranges from 1 to 10; and a number of carbon atoms in the ester group ranges from 1 to 10.

In some embodiments, the n R₅s are all selected from H, and the catalyst has a structural formula shown in formula (1-1), formula (1-2), or formula (1-3):

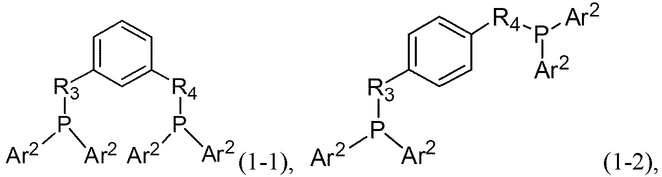

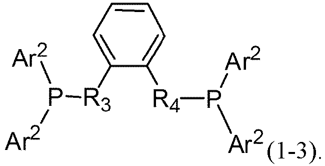

In formula (1-1), formula (1-2), and formula (1-3), R₃ is selected from O or NH; R₄ is selected from O or NH; and Ar² is a substituted aryl group, and a substituent of the substituted aryl group includes a carboxyl group. In some implementations of the present disclosure, Ar² may be any one of substituted phenyl, substituted naphthyl, and substituted anthryl.

In some implementations of the present disclosure, Ar² is a substituted phenyl group, and a substituent of the substituted phenyl group includes a carboxyl group. In some embodiments of the present disclosure, a structural formula of Ar² is shown in formula (1-4): 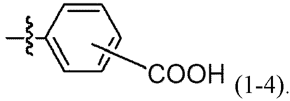 In formula (1-4), the wave bond indicates a linking site.

Currently, an existing polyimide catalyst, for example, a pyridine or quinoline catalyst, mainly react through lone-pair electrons in nitrogen atoms. As nitrogen is the element of the second period and has an orbital more restricted than other elements of the same main group, the lone-pair electrons of nitrogen are relatively less active in the catalytic reaction. The catalyst provided in the present disclosure contains phosphorus atoms. The phosphorus atoms have an orbital more extended than the nitrogen atoms, which facilitates improving the reaction activity and lowering the temperature required for the reaction, to allow the reaction to be carried out under milder conditions, thereby reducing the production costs and improving the production efficiency. The structure of the catalyst has a carboxyl group at the end. The carboxyl group can crosslink with an amino group at the end of the polyimide molecule or form a hydrogen bond with imide, so that the catalyst bonds with the polymer chain to form a part of the polymer chain, promoting the tight connection between the polymer chains. This facilitates the removal of the catalyst, thereby implementing stable film-forming.

In some implementations of the present disclosure, R₅ is selected from an alkyl group or an alkoxy group; and one or more of the n R₅s are in an ortho-position or a para-position of 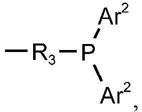 and/or one or more of the n R₅s are in an ortho-position or a para-position of 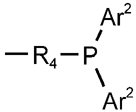 . The alkyl group or the alkoxy group is an electron-donating group, which facilitates further improving the activity of the catalyst when in an ortho-position or a para-position of 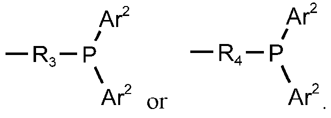 In some embodiments, the alkoxy group includes one or more of methoxy, ethoxy, propoxy, and butoxy. In some embodiments, the ester group includes one or more of methyl formate, methyl acetate, ethyl formate, or ethyl acetate.

In some specific implementations of the present disclosure, the catalyst has a molecular structural formula shown in formulas (A) to (C):

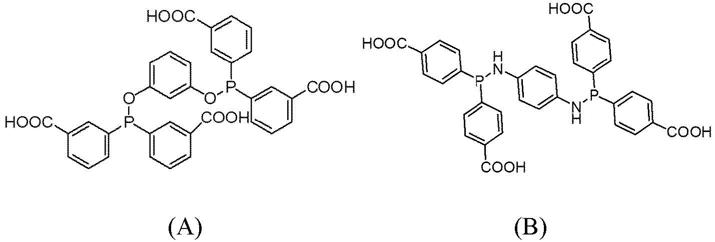

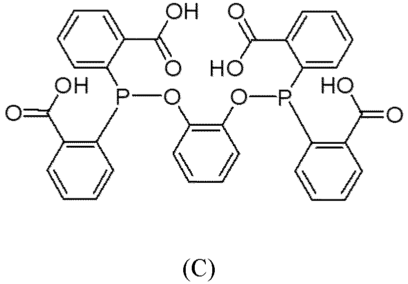

The present disclosure further provides a method for preparing the foregoing catalyst, including the following steps:

A first raw material, a second raw material, and a first solvent are mixed to undergo a first reaction to obtain an intermediate product. The intermediate product is hydrolyzed to obtain the catalyst.

In an implementation of the present disclosure, the first raw material is phenylphosphonic chloride with a protecting group, and a chemical formula of the first raw material is Ar¹₂PCl, where Ar¹ is a substituted aryl group, and a substituent of the substituted aryl group includes one or more of cyano, 1,3-dioxolane, and methyl formate. In some embodiments, a structural formula of Ar¹ is shown in formula (2-4), formula (2-5), or formula (2-6):

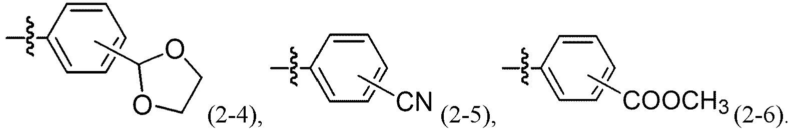

In an implementation of the present disclosure, a structural formula of the second raw material is shown in formula (2):

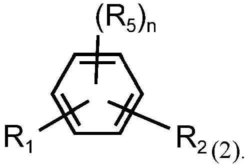

In formula (2), R₁ and R₂ are independently selected from OH or NH₂; and the n R₅s are independently selected from a hydrogen atom, a chlorine atom, a bromine atom, an iodine atom, a cyano group, a nitro group, an ester group, an alkyl group, an alkoxy group, or a haloalkyl group, and n is an integer from 1 to 4. In some embodiments, the n R₅s are all H, and a structural formula of the second raw material is shown in formula (2-1), formula (2-2), or formula (2-3):

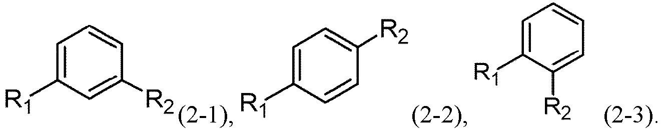

In formula (2-1), formula (2-2), and formula (2-3), R₁ and R₂ are independently selected from OH or NH₂. In some embodiments, the second raw material includes one or more of diphenol and diamine. The diamine may be one or more of o-phenylenediamine, m-phenylenediamine, and p-phenylenediamine. The diphenol may be one or more of m-dihydroxybenzene, p-dihydroxybenzene, and o-dihydroxybenzene. In some implementations of the present disclosure, the first solvent includes one or more of tetrahydrofuran or ethyl ether. In some implementations of the present disclosure, a temperature for the first reaction ranges from 0°C to 80°C, and time for the first reaction ranges from 2 h to 48 h. The temperature for the first reaction may be specifically, but is not limited to, 0°C, 10°C, 15°C, 20°C, 25°C, 30°C, 40°C, 50°C, 60°C, or 80°C. The time for the first reaction may be specifically, but is not limited to, 2 h, 5 h, 10 h, 20 h, 30 h, or 48 h.

In some implementations of the present disclosure, the method for preparing the catalyst includes the following steps:

Step 100: The first raw material, the second raw material, and the first solvent are mixed for a reaction. A molar ratio of the first raw material to the second raw material to the first solvent is (1.5-2.5):1:(10-300), a temperature for the reaction ranges from 0°C to 80°C, and time for the reaction ranges from 2 h to 48 h. In some embodiments, a molar ratio of the first raw material to the second raw material to the first solvent is (1.8-2.1):1:(10-300). In some implementations of the present disclosure, after the reaction is completed, a mixture of a non-polar solvent and water is added to a reaction solution for extraction, and an organic phase on the upper layer is taken and recrystallized to obtain an intermediate product. The non-polar solvent includes one or more of ethyl acetate, ethyl ether, and dichloromethane. A solvent for the recrystallization may be a mixture of dichloromethane and n-hexane, a mixture of ethanol and water, or a mixture of methanol and water. In some embodiments, a small amount of triethylamine is added to the mixture of the first raw material, the second raw material, and the first solvent, to adjust the mixture to be weakly alkaline.

Step 200: The intermediate product is hydrolyzed under acidic or alkaline conditions. After the reaction is completed, a non-polar solvent and an aqueous solution of an alkali are added for extraction, an aqueous solution of an acid is added to an extracted aqueous-phase solution, and a precipitate is filtered and washed to obtain the catalyst. The aqueous solution of the alkali may be an aqueous solution of sodium hydroxide or potassium hydroxide in a concentration of 1 mol/L to 5 mol/L. The aqueous solution of the acid may be an aqueous solution of hydrogen chloride in a concentration of 1 mol/L to 5 mol/L.

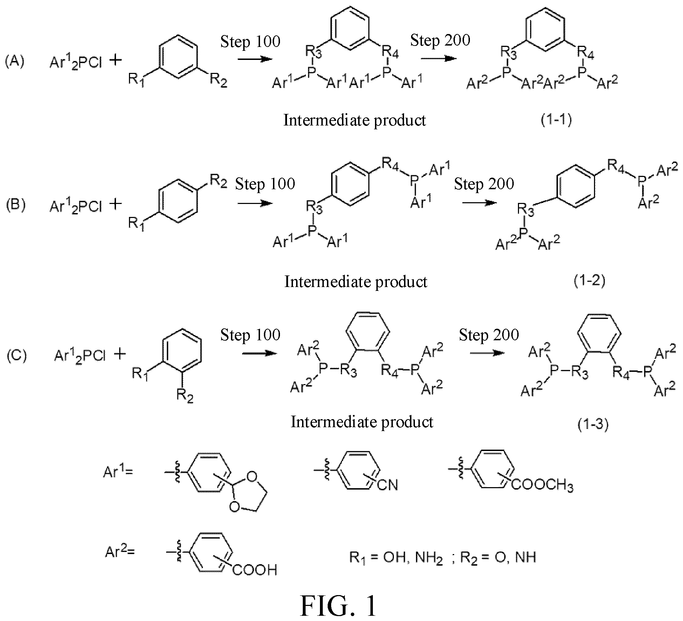

Refer to FIG. 1. FIG. 1 is a schematic diagram of a process of preparing a catalyst according to the present disclosure. (A) in FIG. 1 is a schematic diagram of a process of preparing the compound shown in formula (1-1). (B) in FIG. 1 is a schematic diagram of a process of preparing the compound shown in formula (1-2). (C) in FIG. 1 is a schematic diagram of a process of preparing the compound shown in formula (1-3).

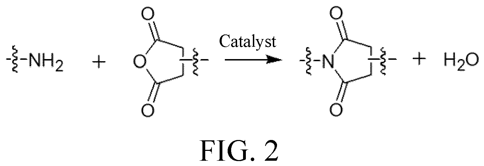

The present disclosure further provides a method for preparing polyimide, including the following step: The catalyst provided in the present disclosure is mixed with diamine, dianhydride, and a second solvent to undergo a second reaction to obtain the polyimide. Refer to FIG. 2. FIG. 2 is a schematic diagram of a process of preparing polyimide according to an embodiment of the present disclosure. In some implementations of the present disclosure, a molar ratio of the diamine to the dianhydride to the catalyst to the solvent is (0.95-1):(0.95-1):(0.0001-0.5):(25-200). In some embodiments, a molar ratio of the diamine to the dianhydride to the catalyst to the solvent is (0.95-1):(0.95-1):(0.01-0.1):(50-150). In some implementations of the present disclosure, the diamine, the catalyst, and the second solvent are first mixed, and the dianhydride is then added slowly. In some embodiments of the present disclosure, the compound shown in formula (1-2) is used as the catalyst for the reaction, where a molar ratio of the diamine to the dianhydride to the catalyst to the solvent is (0.95-1):(0.95-1):(0.05-0.3):(25-200).

In some implementations of the present disclosure, the diamine includes one or more of o-phenylenediamine, m-phenylenediamine, p-phenylenediamine, 4,4'-diaminodiphenyl ether, 4,4'-diaminodiphenyl sulfone, 1,3-diamino-2-methylpropane, N,N-bis(4-aminophenyl)-1,4-benzenediamine, and 9,9-bis(4-aminophenyl)fluorene; the dianhydride includes one or more of 2,3,3',4'-diphenyl ether tetracarboxylic acid dianhydride, 3,3',4,4'-tetracarboxybenzophenone dianhydride, 3,3',4,4'-tetracarboxydiphenylsulfone dianhydride, 2,2-bis(3,4-dicarboxyphenyl)hexafluoropropane dianhydride, 4,4'-bis(3,4-dicarboxyphenoxy)diphenyl ether dianhydride, 4,4'-bis(3,4-dicarboxyphenoxy)benzophenone dianhydride, 4,4'-bis(3,4-dicarboxyphenoxy)diphenylmethane dianhydride, and 4,4'-bis(3,4-dicarboxyphenoxy)diphenylsulfone dianhydride; and the second solvent includes one or more of dimethyl sulfoxide, N-methyl pyrrolidone, N,N-dimethylformamide, and N,N-dimethylacetamide. In some implementations of the present disclosure, a temperature for the second reaction ranges from 60°C to 180°C, and time for the second reaction ranges from 1 h to 48 h. The temperature for the second reaction may be specifically, but is not limited to, 60°C, 80°C, 100°C, 120°C, 140°C, 160°C, or 180°C. The time for the second reaction may be specifically, but is not limited to, 1 h, 2 h, 5 h, 10 h, 20 h, 30 h, or 48 h.

In some implementations of the present disclosure, the method for preparing the polyimide includes the following steps:

Step 100: Diamine, the catalyst, and the second solvent are added sequentially into a reactor, and stirred and mixed uniformly at -20°C to 25°C.

Step 200: Dianhydride is added slowly into the reactor, and heated to 60°C to 180°C, to react for 1 h to 48 h.

Step 300: After the reaction solution is cooled down to room temperature, a polar solvent is added to the reaction system, and then filtered and dried to obtain the polyimide.

In some embodiments, the polar solvent includes one or more of methanol, ethanol, and water. In some embodiments, the compound shown in formula (1-2) is used as the catalyst for the reaction, a temperature for the second reaction ranges from 60°C to 100°C, and time for the second reaction ranges from 8 h to 15 h.

The method for preparing polyimide provided in the present disclosure is simple, by which the polyimide can be prepared through a one-step reaction. The operation is simple, the conditions are mild, and there is no need to remove impurities after the reaction. The product has good performance and good application prospects.

The following further describes the technical solutions of the present disclosure with multiple examples.

### Example 1

A method for preparing a catalyst included the following steps:
18.2 g of bis(3-(1,3-bisdioxolane)phenylphosphonic chloride, 20.2 g of triethylamine, and 11 g of m-dihydroxybenzene were dissolved in 250 mL of tetrahydrofuran under nitrogen protection, and stirred at 25°C for 6 h. After the reaction was completed, water and ethyl acetate were added for extraction. An organic phase on the upper layer was taken and dried with anhydrous sodium sulfate, then concentrated using a rotary evaporator, and then recrystallized with dichloromethane and n-hexane, to obtain a light yellow solid, that is, an intermediate product 1. The reaction equation of the foregoing reaction was as follows:

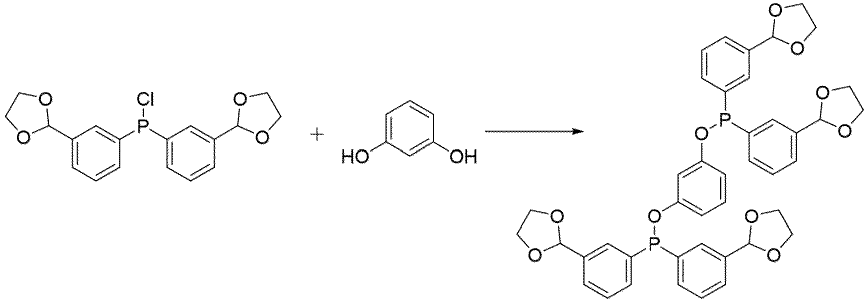

10 g of intermediate product 1 was dissolved in 50 mL of acetone to obtain a solution. 5 g of p-toluenesulfonic acid was added dropwise to the solution, and heated to 50°C and stirred for 3 h. Then, 8 g of chromium trioxide was added and stirred continuously. After the reaction for 18 h, dichloromethane and 1 mol/L aqueous sodium hydroxide solution were added for extraction. An aqueous phase was taken out. 1 mol/L aqueous hydrogen chloride solution was slowly added dropwise to the extracted aqueous-phase solution and then filtered to obtain a filter cake. The filter cake was washed with distilled water for three times and then dried, to obtain a white solid. The white solid was the catalyst 1. The reaction equation of the foregoing reaction was as follows:

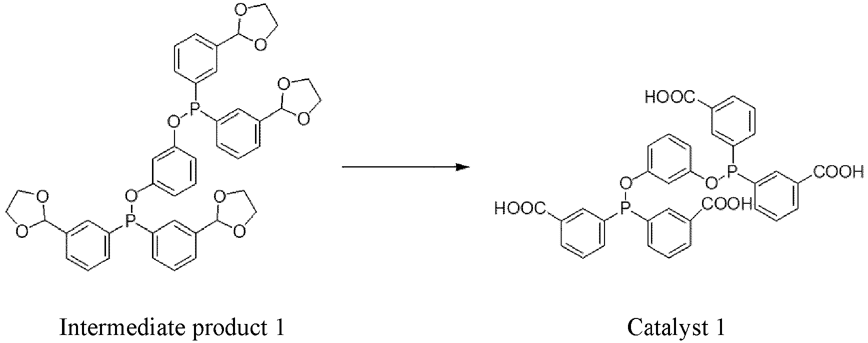

A method for preparing polyimide includes the following steps:
4.810 g of 4,4'-diaminodiphenyl ether, 0.025 g of catalyst 1, and 190 g of N-methyl pyrrolidone were sequentially added into a reactor and stirred, and then cooled down to 0°C. The structure of the catalyst 1 was shown in formula (A):

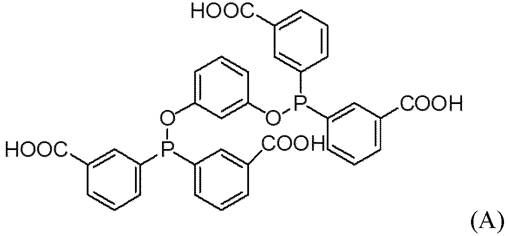

3,3',4,4'-benzophenonetetracarboxylic dianhydride was added slowly into the reactor. The reactor was heated to 120°C, prior to stirring for 36 h. After the reaction system was cooled down to room temperature, methanol was added, filtered, and dried to obtain the polyimide solid.

### Example 2

A method for preparing a catalyst included the following steps:
13.5 g of bis(4-(1,4-cyano)phenylphosphonic chloride, 20.2 g of triethylamine, and 10.8 g of p-phenylenediamine were dissolved in 250 mL of tetrahydrofuran under nitrogen protection, and stirred at 80°C for 12 h. After the reaction was completed, water and ethyl acetate were added for extraction. An organic phase on the upper layer was taken and dried with anhydrous sodium sulfate, then concentrated using a rotary evaporator, and then recrystallized with dichloromethane and n-hexane, to obtain a light yellow solid, that is, an intermediate product 2. The reaction equation of the foregoing reaction was as follows:

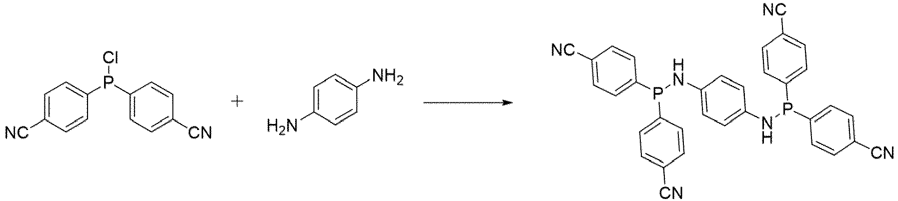

10 g of intermediate product 2 was dissolved in 50 mL of 0.5 mol/L dilute hydrochloric acid, and heated to reflux for 18 h. Then, the heating was stopped. After the solution was cooled down to room temperature, dichloromethane and 1 mol/L aqueous sodium hydroxide solution were added for extraction. An aqueous phase was taken out. 1 mol/L aqueous hydrogen chloride solution was slowly added dropwise to the extracted aqueous-phase solution and then filtered to obtain a filter cake. The filter cake was washed with distilled water for three times and then dried, to obtain a white solid. The white solid was the catalyst 2. The reaction equation of the foregoing reaction was as follows:

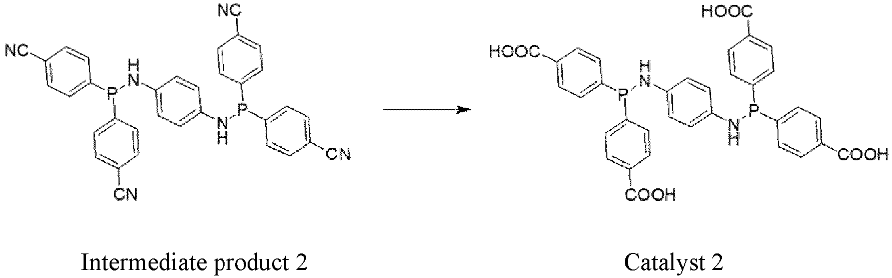

A method for preparing polyimide includes the following steps:
4.810 g of 4,4'-diaminodiphenyl ether, 0.025 g of catalyst 2, and 190 g of N-methyl pyrrolidone were sequentially added into a reactor and stirred, and then cooled down to 0°C. The structure of the catalyst 2 was shown in formula (B):

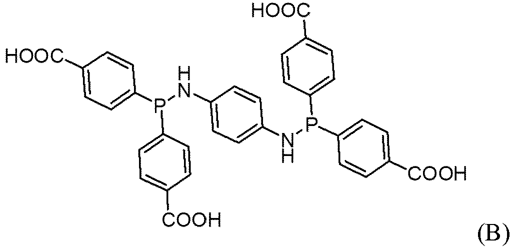

3,3',4,4'-benzophenonetetracarboxylic dianhydride was added slowly into the reactor. The reactor was heated to 80°C, prior to stirring for 12 h. After the reaction system was cooled down to room temperature, methanol was added, filtered, and dried to obtain the polyimide solid.

### Example 3

A method for preparing a catalyst included the following steps:
16.8 g of bis(2-(1,2-methyl ester)phenylphosphonic chloride, 20.2 g of triethylamine, and 10.8 g of o-dihydroxybenzene were dissolved in 350 mL of ethyl ether under nitrogen protection, and stirred at 0°C for 6 h. After the reaction was completed, water and ethyl acetate were added for extraction. An organic phase on the upper layer was taken and dried with anhydrous sodium sulfate, then concentrated using a rotary evaporator, and then recrystallized with dichloromethane and n-hexane, to obtain a light yellow solid, that is, an intermediate product 3. The reaction equation of the foregoing reaction was as follows:

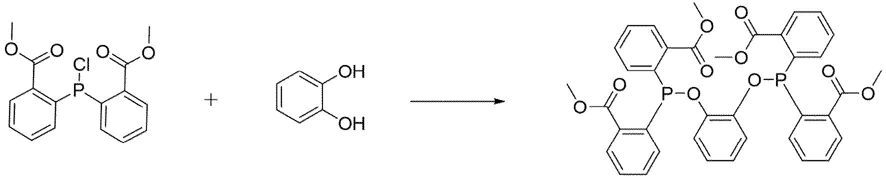

10 g of intermediate product 3 was dissolved in 50 mL of 0.5 mol/L dilute hydrochloric acid, and heated to reflux for 18 h. Then, the heating was stopped. After the solution was cooled down to room temperature, dichloromethane and 1 mol/L aqueous sodium hydroxide solution were added for extraction. An aqueous phase was taken out. 1 mol/L aqueous hydrogen chloride solution was slowly added dropwise to the extracted aqueous-phase solution and then filtered to obtain a filter cake. The filter cake was washed with distilled water for three times and then dried, to obtain a white solid. The white solid was the catalyst 3. The reaction equation of the foregoing reaction was as follows:

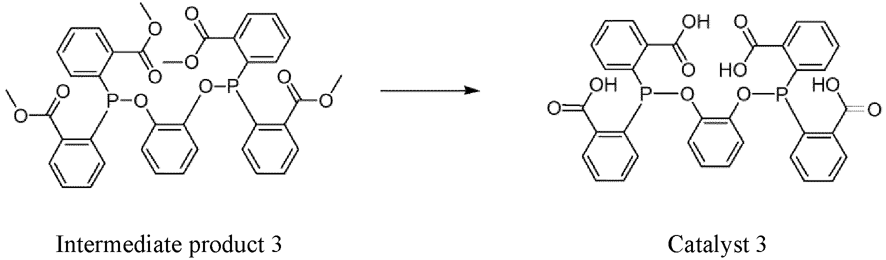

A method for preparing polyimide includes the following steps:
4.810 g of 4,4'-diaminodiphenyl ether, 0.025 g of catalyst 3, and 190 g of N-methyl pyrrolidone were sequentially added into a reactor and stirred, and then cooled down to 0°C. The structure of the catalyst 3 was shown in formula (C):

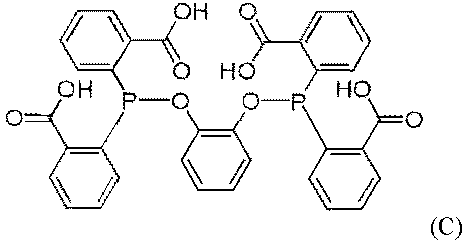

3,3',4,4'-benzophenonetetracarboxylic dianhydride was added slowly into the reactor. The reactor was heated to 100°C, prior to stirring for 48 h. After the reaction system was cooled down to room temperature, methanol was added, filtered, and dried to obtain the polyimide solid.

### Example 4

A method for preparing polyimide includes the following steps:
The difference between Example 4 and Example 2 was that the amount of the catalyst 2 added in Example 4 was 0.5 g. The polyimide solid was prepared by using the same method as in Example 2.

### Comparative Example 1

A method for preparing polyimide includes the following steps:
4.810 g of 4,4'-diaminodiphenyl ether, 0.025 g of isoquinoline, and 190 g of N-methyl pyrrolidone were sequentially added into a reactor and stirred, and then cooled down to 0°C.

3,3',4,4'-benzophenonetetracarboxylic dianhydride was added slowly into the reactor. The reactor was heated to 60°C, prior to stirring for 12 h. After the reaction system was cooled down to room temperature, methanol was added, filtered, and dried to obtain the polyimide solid.

### Effect examples

To verify the properties of the catalyst and polyimide prepared in the present disclosure, the present disclosure further provides the effect examples.
1) The structures of the intermediate products and catalysts obtained in Examples 1 to 3 were characterized through nuclear magnetic resonance, to obtain the following results of the hydrogen NMR spectrum:
   Intermediate product 1: 1H NMR (500 MHz, Chloroform-d) δ 7.58 (ddt, J = 7.6, 2.3, 1.2 Hz, 1H), 7.49 - 7.41 (m, 2H), 7.43 - 7.33 (m, 2H), 6.84 - 6.78 (m, 1H), 5.68 (d, J = 0.7 Hz, 1H), 4.08 - 3.95 (m, 6H).
   Catalyst 1: 1H NMR (500 MHz, Chloroform-d) δ 7.99 (td, J = 2.1, 1.2 Hz, 1H), 7.91 (ddd, J = 7.5, 2.1, 1.2 Hz, 1H), 7.64 (ddt, J = 7.8, 2.3, 1.2 Hz, 1H), 7.50 - 7.43 (m, 1H), 6.84 - 6.78 (m, 1H).
   Intermediate product 2: 1H NMR (500 MHz, Chloroform-d) δ 7.70 - 7.62 (m, 2H), 7.57 - 7.51 (m, 2H), 6.89 (s, 1H).
   Catalyst 2: 1H NMR (500 MHz, Chloroform-d) δ 9.85 (s, 1H), 8.04 - 7.97 (m, 3H), 7.54 - 7.48 (m, 3H), 6.89 (s, 1H), 5.85 (s, 1H).
   Intermediate product 3: 1H NMR (500 MHz, Chloroform-d) δ 7.91 - 7.85 (m, 1H), 7.55 - 7.45 (m, 2H), 7.36 - 7.29 (m, 1H), 7.08 - 6.95 (m, 1H), 3.89 (s, 2H).
   Catalyst 3: 1H NMR (500 MHz, Chloroform-d) δ 7.84 (ddd, J = 7.7, 4.0, 1.6 Hz, 1H), 7.57 - 7.49 (m, 1H), 7.43 (dt, J = 7.9, 1.3 Hz, 1H), 7.29 (td, J = 7.5, 1.5 Hz, 1H), 7.08 - 6.95 (m, 1H).
   Polyimide in Comparative Example 1: 1H NMR (500 MHz, THF-d8) δ 8.48 (d, J = 1.7 Hz, 1H), 8.39 (d, 2H), 8.26 (d, 1H), 8.15 (ddd, 3H), 8.04 (d, 2H), 7.45-7.39 (m, 4H), 7.15 -7.09 (m, 4H).
   The degree of cyclization of the products obtained in Examples 1 to 4 and Comparative Example 1 was tested through the hydrogen NMR spectrum (500 MHz, DMSO-d6). The uncyclized chemical shift was 7.94 ppm, the cyclized chemical shift was 8.24 ppm, and the degree of cyclization = cyclized chemical shift integral/(uncyclized chemical shift integral + cyclized chemical shift integral). The test results were shown in Table 1.
2) The film-forming properties of the polyimides obtained in Examples 1 to 4 and Comparative Example 1 were characterized with the specific evaluation criteria and processes as follows: A wet film of a corresponding solution was prepared on a clean glass plate through coating and casting. The wet film was transferred into an oven and heated according to the following heating procedure for imidization: 80°C/2 h, 120°C/1 h, 160°C/1 h, 180°C/1 h, 240°C/1 h, 280°C/1 h, and 350°C/1 h, at a heating rate of 2°C/min. After the glass plate was cooled down to room temperature, the glass plate coated with the polyimide film was soaked in deionized water to peel off the polyimide film, to obtain the corresponding self-supporting PI film. The evaluation of the film-forming property is specifically as follows: If the film is formed into a whole film material on the glass with no cracks on the surface and kept intact after peeling off, the film-forming property is very good. If the film is formed into a whole film material on the glass with no cracks on the surface and cannot be kept intact after peeling off, the film-forming property is average. If the film is formed into fragments on the glass, the film cannot be formed. The test results are shown in Table 1.

**Table 1 Properties of the polyimides obtained in Examples 1 to 4 and Comparative Example 1**

| Experimental group | Degree of cyclization | Film-forming property |
|---|---|---|
| Example 1 | 89% | Very good |
| Example 2 | 95% | Very good |
| Example 3 | 78% | Very good |
| Example 4 | 94% | Average |
| Comparative Example 1 | 56% | Average |

As can be learned from Table 1, compared with the polyimide prepared with the catalyst in Comparative Example 1, the polyimide prepared with the catalyst in the present disclosure has a higher degree of cyclization. The catalyst of the structure in Example 2 has more prominent catalytic performance due to the electrical property of the catalyst, so that the polyimide has a higher degree of cyclization. The degree of cyclization of the polyimide in Example 3 is lower due to the steric hindrance effect of the catalyst. In terms of film formation, the catalyst as small molecules in Comparative Example 1 hinders the cross-linking of the polyimide, and consequently affects the film-forming effect; while the catalyst of the specific structure in the example of the present disclosure can crosslink with the polymers , which promotes the film formation of the product and improves the film-forming property of the product. In Example 4, due to an extremely high amount of the catalyst added, under the same conditions, although the catalyst takes effect in crosslinking, the prepared film material is more likely to absorb water due to increased polar groups, and the difficulty in curing the film material is increased due to increased small molecules in the solution, so that the film-forming property of the product is slightly reduced.

The foregoing descriptions are exemplary implementations of the present disclosure, but cannot be construed as a limitation to the scope of the present disclosure. It should be noted that a person of ordinary skill in the art may further make several improvements and modifications without departing from the principle of the present disclosure. These improvements and modifications shall fall within the protection scope of the present disclosure.

## Claims

1. A catalyst for synthesizing polyimide, wherein the catalyst has a structural formula shown in formula (1): 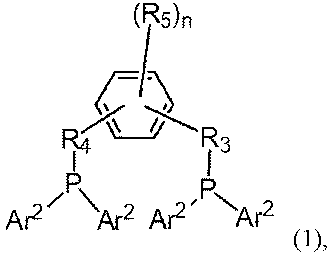 in formula (1), R₃ is selected from O or NH; R₄ is selected from O or NH ; Ar² is a substituted aryl group, and a substituent of the substituted aryl group comprises a carboxyl group; R₅ is selected from a hydrogen atom, a chlorine atom, a bromine atom, an iodine atom, a cyano group, a nitro group, an ester group, an alkyl group, an alkoxy group, or a haloalkyl group, n is an integer from 1 to 4.

2. The catalyst for synthesizing polyimide according to claim 1, wherein the catalyst has a structural formula shown in formula (1-1), formula (1-2), or formula (1-3):

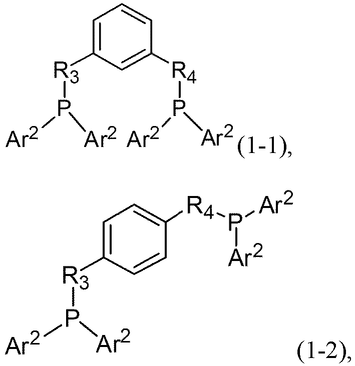

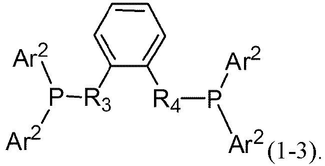

3. The catalyst for synthesizing polyimide according to claim 2, wherein the catalyst has a molecular structural formula shown in formulas (A) to (C):

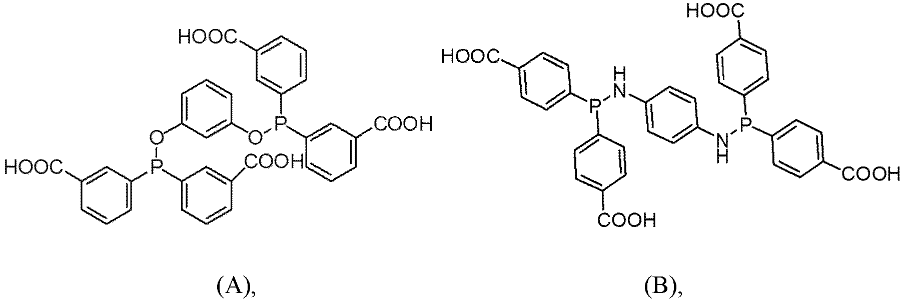

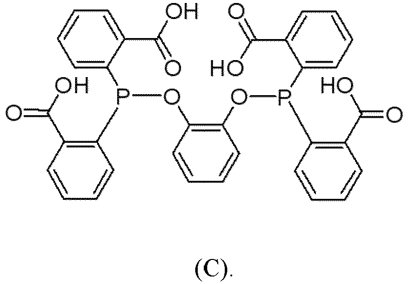

4. The catalyst for synthesizing polyimide according to claim 1, wherein R₅ is selected from an alkyl group or an alkoxy group; one or more of the n R₅s are in an ortho-position or a para-position of 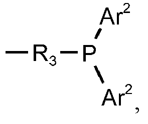 and/or one or more of the n R₅s are in an ortho-position or a para-position of

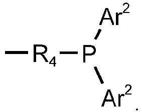

5. The catalyst for synthesizing polyimide according to claim 1 or 4, wherein a number of carbon atoms in the alkyl group ranges from 1 to 10; a number of carbon atoms in the haloalkyl group ranges from 1 to 10; a number of carbon atoms in the alkoxy group ranges from 1 to 10; and a number of carbon atoms in the ester group ranges from 1 to 10.

6. A method for preparing a catalyst for synthesizing polyimide, comprising:
mixing a first raw material, a second raw material, and a first solvent to undergo a first reaction to obtain an intermediate product; and
hydrolyzing the intermediate product to obtain the catalyst for synthesizing polyimide,
a chemical formula of the first raw material being Ar¹₂PCl, wherein Ar¹ is a substituted aryl group, and a substituent of the substituted aryl group comprises one or more of cyano, 1,3-dioxolane, and methyl formate; and
a structural formula of the second raw material being shown in formula (2): 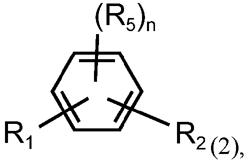 in formula (2), R₁ being selected from OH or NH₂; R₂ being selected from OH or NH₂; R₅ being selected from a hydrogen atom, a chlorine atom, a bromine atom, an iodine atom, a cyano group, a nitro group, an ester group, an alkyl group, an alkoxy group, or a haloalkyl group, and n being an integer from 1 to 4.

7. The method for preparing the catalyst for synthesizing polyimide according to claim 6, wherein a temperature for the first reaction ranges from 0°C to 80°C, and time for the first reaction ranges from 2 h to 48 h.

8. The method for preparing the catalyst for synthesizing polyimide according to claim 6 or 7, wherein a molar ratio of the first raw material to the second raw material to the first solvent is (1.5-2.5):1:(10-300).

9. The method for preparing the catalyst for synthesizing polyimide according to any one of claims 6 to 8, wherein the second raw material comprises one or more of o-phenylenediamine, m-phenylenediamine, p-phenylenediamine, m-dihydroxybenzene, p-dihydroxybenzene, and o-dihydroxybenzene.

10. A polyimide compound, wherein the polyimide compound is obtained by mixing the catalyst for synthesizing polyimide according to any one of claims 1 to 5 or the catalyst obtained by using the method for preparing the catalyst for synthesizing polyimide according to any one of claims 6 to 9, diamine, dianhydride, and a second solvent to undergo a second reaction.

11. The polyimide compound according to claim 10, wherein a molar ratio of the diamine to the dianhydride to the catalyst to the second solvent is (0.95-1):(0.95-1):(0.0001-0.5):(25-200).

12. The polyimide compound according to claim 10 or 11, wherein a temperature for the second reaction ranges from 60°C to 180°C, and time for the second reaction ranges from 1 h to 48 h.
